# EUROPEAN PATENT SPECIFICATION

(11) **EP 2 732 701 B1**
(45) Date of publication and mention of the grant of the patent: **16.09.2015**
(21) Application number: 13193079.4
(22) Date of filing: 15.11.2013
(51) Int. Cl.: A01K 63/06

(54) **An aquarium luminaire**
Aquariumleuchte
Luminaire d'aquarium

(30) Priority: 15.11.2012 GB 201220585
(43) Date of publication of application: 21.05.2014
(73) Proprietor: Tropical Marine Centre Limited, Chorleywood Hertfordshire WD3 5SX (GB)
(72) Inventor: West, Paul, Chorleywood, Hertfordshire WD3 5SX (GB)
(74) Representative: Clarke, Geoffrey Howard

(56) References cited:
- DE-A1-102010 004 042
- US-A1- 2007 253 196
- US-A1- 2008 316 732
- US-A1- 2011 285 295
- DATABASE WPI Week 201251 Thomson Scientific, London, GB; AN 2012-J67206 XP002720014, -& JP 3 177205 U (VOLX JAPAN KK) 26 July 2012 (2012-07-26)

## Description

This invention relates to a luminaire for an aquarium, particularly, but not exclusively, to a luminaire for an aquarium having coral therein.

It is known that light at wavelengths (λ) from approximately 350nm (Violet) to approximately 750nm (red) plays an important role in the reproductive cycles and feeding habits of many aquatic animals/plants e.g. coral, plant and fish species. For example, natural twilight & moonlight which comprise blue light of wavelengths ∼390-490nm are known to influence the reproduction cycle of coral. Furthermore, light is also extremely important to allow organisms which live on the tissue of coral to photosynthesize e.g. zooxanthellae.

Luminaires are frequently provided in aquariums containing reef animals/plants therein, whereby the aquariums are lit with lamps provided in a housing located above the aquarium, such that the light from the lamps propagates through the water in the aquarium to the coral. Such lamps generally include metal halide lamps and/or fluorescent lamps which emit light over the entire visible spectrum.

However, lighting systems having lamps generally include such attributes as low lumen output, poor lumen maintenance, a large color drift and varying temperatures which can each negatively impact the growth and reproduction conditions of coral and plants in such aquariums.

In the art, luminaires using arrays of light emitting diodes (LEDs) are used in aquariums, whereby LEDs provide a more stable output than lamps, and provide less heat output with lower voltage requirements.

Generally, white LEDs, designed for general illumination, are used in luminaires. White LEDs emit light over a broad visible spectrum whereby some components of the visible spectrum are more readily absorbed by the water in the tank than other components. For example, longer red wavelengths (∼610-700nm) are more readily absorbed than shorter blue wavelengths (∼400-490nm), which means that the blue components of the white light propagate further through the water column in the tank and may be more important in affecting the growth/reproduction of plants/animals therein, particularly corals.

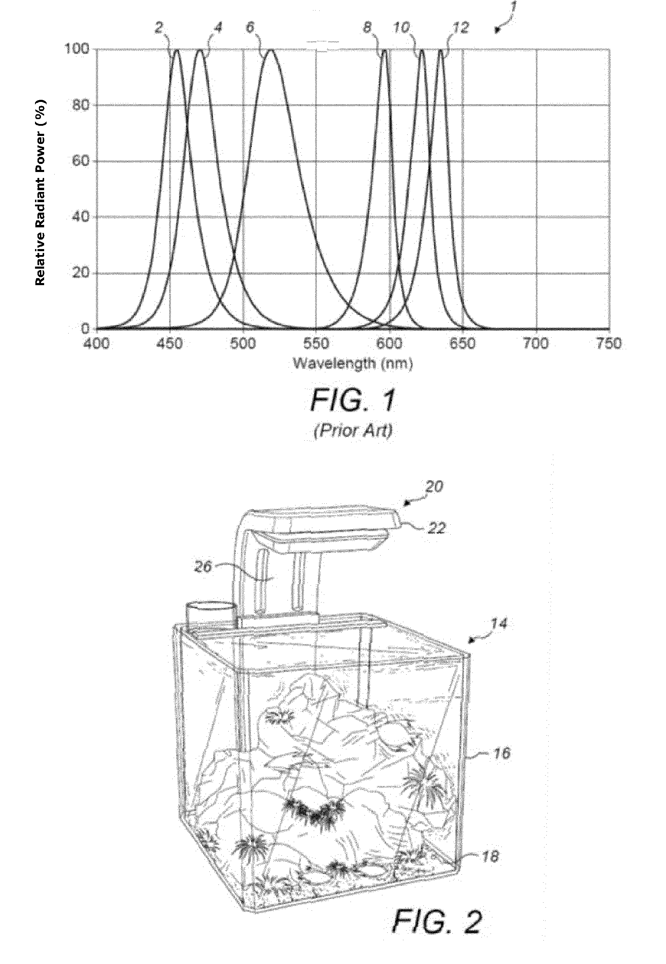

It will be seen that by combining an LED having a single peak in its emission spectrum (as shown in Figure 1) with another LED(s) having a single peak or with a white LED, it will be possible for an aquarium enthusiast to produce a desired colour output.

Such a combination of LEDS having single peaks replicates the natural environment of animals/plants within the aquarium a particular time of day or different times of the diurnal light phases (sunrise & sunset) and lunar phases (lunar cycle), to ensure that such plants/animals relying on blue wavelengths complete their natural feeding and reproductive behavior cycles in the aquarium receive the required biologically useful light components.

However, the skilled person will recognize that it is critically important to carefully select the LEDs which are to be used in an aquarium containing coral and plants because the LEDs will have the potential to have a devastating and detrimental impact on the coral/plants in the aquarium. Therefore, the skilled person will only combine colored LEDs having operating characteristics which he is familiar with e.g single wavelength peak, known luminescence, known brightness, etc.

Manual combination of LEDs to constantly mimic a particular time of day is time consuming and laborious. However, aquarium luminaire control systems are used to reactively combine different colored LEDs having a single peak in their emission spectrum and/or white LEDs, to provide a desired combination of light output.

By using such luminaire control systems, the light output is optimised to provide the required light output for photosynthesis and/or reproduction and/or for any aesthetic requirements. However, such luminaire systems are expensive.

It will be appreciated that using known colored LEDs having a single peak, either alone or in combination (manually or otherwise) with other known colored LEDs/white LEDs provides a level of comfort to the skilled person that he is using a correct LED/combination of LEDs for a particular coral type, and or other plant/animal type, and that he is not unwittingly introducing inappropriate wavelengths/intensities into the aquarium which will not support growth/reproduction of the plants/animals therein.

It is an object of the present invention to overcome or at least mitigate some or all of the aforementioned disadvantages.

Accordingly, there is provided an aquarium luminaire comprising the technical features of independent claim 1, said aquarium luminaire having at least one non-white LED, characterised in that the at least one non-white LED comprises at least two peaks at wavelengths between 350nm≤λ≤750nm in the emission spectrum of the LED, wherein a dominant peak of the at least two peaks is at between 390nm≤λ≤490nm.

Such functionality has the advantage of allowing the shorter wavelengths to penetrate water of the aquarium deeper along with longer wavelengths from a single LED.

Therefore, combining an LED emitting blue light having at least two peaks on its emission spectrum with a colored LED(s) having single peaks on its emission spectrum and/or with white LEDs in a luminaire, provides a way to more accurately replicate the lighting of the natural conditions of plants and/or animals in the aquarium such that the light produced from the luminaire is biologically and aesthetically useful for all times of day but particularly useful for simulating twilight, moonlight and dusk, when typically one or more solely non-white LED's are used.

Preferably, the at least one non-white LED comprises: a first peak at 390nm≤λ≤490nm (I_{REL}=1) on a relative spectral emission curve of the LED and a second peak at between 490 and 700nm (0<I_{REL}≤=1).

Preferably, the at least one non-white LED is combined with at least one white LED and/or at least one colored LED.

Preferably, the emission of the at least one non-white LED is controlled by a controller.

Preferably, the controller controls the emission of any further LED combined with the at least one non-white LED.

Preferably, the at least one non-white LED emits blue light comprising a red shifted element.

According to claim 7 there is provided an aquarium comprising an aquarium luminaire as claimed in any preceding claim.

US 2007/0253196 discloses an aquarium lighting system including an LED array that has multiple white light LEDs and multiple blue light LEDs. A control system may separately control the intensity of the white and blue light output by the white and blue LEDs respectively.
Figure 1 shows a chart which is graphically representative of the relative spectral power distribution of 6 different colored LEDs used in luminaires in the prior art.
Figure 2 is a perspective view of an aquarium which is suitable for use in embodiments of the present invention;
Figure 3a is bottom-up view of a luminaire of the present invention having a at least two LEDs therein;
Figure 3b is an LED suitable for use in the luminaire of Figure 3a; and
Figure 4 shows a suitable relative spectral emission curve of an LED of Figure 3b.

In order to quantify colour, the emission spectrum or wavelength composition of light must be known.

Figure 1 shows a chart 1 which is a graphical representation of the relative power distribution curves for 6 different colored LEDs (2, 4, 6, 8 , 10 and 12), which are commonly used in aquarium luminaires in the art e.g. the Cree® XLamp ® XP-E LEDs, whereby wavelength (λ) is shown on the x-axis and relative radiant power (%) on the y-axis.

Alternatively, the emission spectrum may be represented as a relative spectral emission curve (RSE). The RSE is representative of the emission spectrum and shows the normalised light intensity (I_{REL}) emitted from an LED at each particular wavelength.

The individual relative spectral power distribution curves or RSE curves of LEDs are obtained by LED manufacturers using standard testing techniques at standard temperatures and currents for example 20°C ≤ Temperature (T) ≤ 95°, 100mA ≤ I_{F} ≤ 900mA and such characteristics are provided for each LED by manufacturers to enable users identify the most appropriate LED for their required application.

As discussed above, each of the represented LEDs 2, 4, 6, 8, 10 and 12 have a single peak ∼100% on their respective SPD curves, whereby the relative radiant power % rises from a value substantially equal to 0% to a peak value substantially equal to 100% and falls (tapers) rapidly to a value substantially equal to 0% in each case such that the light output of a typical LED has a narrowband spectral bandwidth between 15nm and 20nm and a peak wavelength in the visible regions of the spectrum.

Specifically, Figure 1 shows the characteristics of: a royal blue LED 2 having a single peak at between 450 and 465 nm; a blue LED 4 having a single peak at between 465 and 485 nm; a green LED 6 having a single peak at between 520 and 535 nm; an amber LED 8 having a single peak at between 585 and 595 nm; a red-orange LED 10 having a single peak at between 610 and 620 nm; and a red LED 12 having a single peak at between 620 and 630 nm.

Figure 2 is a perspective view of an aquarium 14 which is suitable for use in the present invention. The aquarium 14 is formed of an enclosed tank 16 having at least one transparent side 18 e.g. made from acrylic, glass or any other suitable transparent material capable of forming a water tank. The tank 16 is formed for holding water, either fresh or saltwater, and to accommodate aquatic animals, plants, water and/or aesthetic features therein e.g. fish, corals, invertebrates, aquascapes, water filters etc.

The tank 16 may be formed to hold any capacity of water as desired by a user e.g. from 1I up to and exceeding 1000I. Such aquariums 14 are known in the art e.g. Tropical Marine Centre's *MicroHabitat* and *Signature tank range.*

The aquarium 14 also comprises a luminaire shown generally at 20. The luminaire 20 comprises a housing 22 formed of metal, plastic or any suitable material used for manufacturing the luminaire housing, LEDs (not shown), power source (not shown). A bracket 26 may be used to position and retain the housing 22 at a distance spaced from the tank 16. It will be seen that the luminaires 20 should have an IP rating suitable for aquarium luminaires e.g. IP67, and the luminaire 20 may comprise a passively cooled housing 22, or a housing 22 having cooling fans thereon or therein. Such luminaires 20 are known in the art e.g Tropical Marine Centre's *Aquaray*® *solid state lighting range* and typified by its new Nature Perfect Luminaires. Alternatively, the luminaire may be located within the aquarium 14.

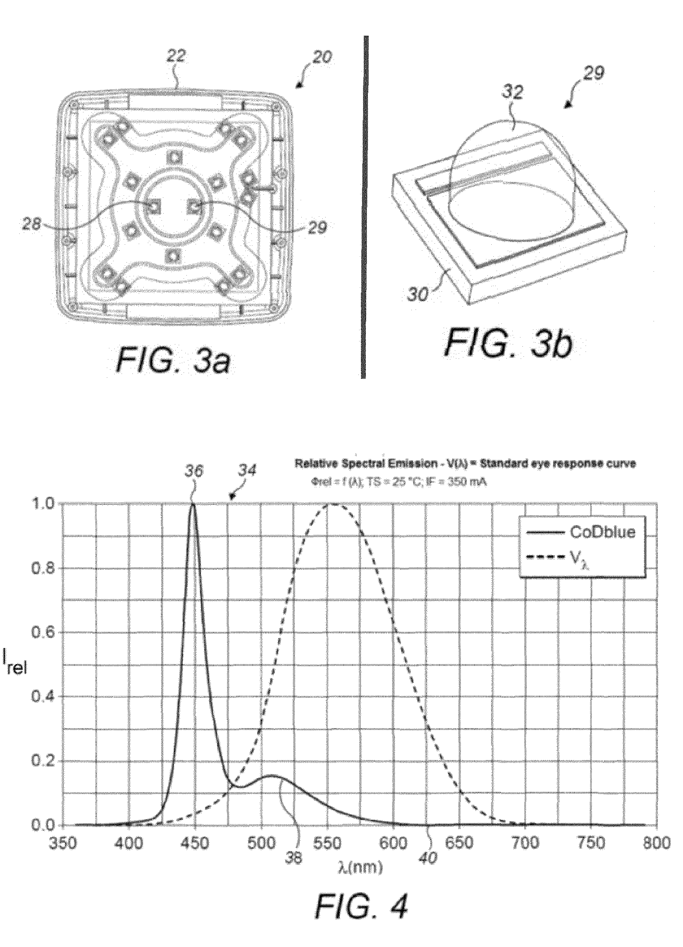

Figure 3a is bottom-up view of a luminaire 20 incorporating at least one LED 28/29, whilst Figure 3b is an LED 29 suitable for use in the present invention.

Any configuration/number/color/type of LED(s) 28/29 can be arranged in the housing 22 depending on the specific requirements of the aquatic plants and/or animals within the tank (not shown), or dependent on the aesthetic requirements of a user.

As discussed above, LEDs of one colour (e.g. white) or a mixture of colors e.g. red and/or green and/or blue and/or white LEDs 28/29 are used in the luminaire 20 to achieve specific emission characteristics as required.

A LED controller (not shown) can be used to control all/individual LEDs 28/29 which are required to be on/off at any specific moment in time, to control the level of brightness of all/individual LEDs 28/29, and/or to project a specific colored blend of light into the water depending on the time of day by combining certain LEDs 28/29.

For example, the luminaire 20 may be controlled by the controller (not shown) using current or voltage regulation or PWM, so as to simulate the natural cycles of daylight, twilight, moonlight, dusk and/or cloud cover to achieve natural growth, feeding, behavior and reproductive activity in the animals within the aquarium 14 e.g. fish and coral. Such controllers are known in the art e.g. AquaRay® Control or AquaRay® Multicontrol. Alternatively a controller may not be used, whereby the LEDs 28/29 in the Luminaire 20 may be connected to a power supply individually or as a group via a switch(es), for an on/off functionality.

The LED 29 shown in Figure 3b is generally formed as a single unit comprising a base ceramic pad 30 with integrated contacts (not shown) formed, for example, on the underneath of the ceramic pad 30 for electronic connection to a power source (not shown).

The LED 29 also comprises a transparent cover 32 which acts as a lens through which the light is emitted e.g. a silicone cast. The LED 29 can be attached to a printed circuit board (not shown) in the luminaire 20 using any suitable methods e.g. surface mount technology, and secured by means of any suitable process e.g. reflow soldering. Alternatively, the LED 29 may be connected directly to a power source (not shown) as may be required by a specific user application.

Figure 4 is a chart 34 representing the emission spectrum of a LED 29 as a relative spectral emission curve whereby, Φrel = f (λ); T = 25 °C; IF = 350 mA.

In the chart 34, the LED 29 under consideration has a first dominant peak 36 (0 ≤ I_{REL} ≤ 1) at 445nm and a 2^{nd} peak 38 (0 ≤ I_{REL} ≤ 1) at 512nm. It will be seen that I_{REL} of the LED 29 shown in the chart of 34 does not taper quickly to zero as is the case for all non-white LEDs used in luminaires known in the art, but instead falls towards zero from a 1^{st} peak 36 and then rises to a second peak 38 at approximately I_{REL} = 0.15, after which the I_{REL} of the LED 29 tapers slowly to zero 40.

It will be appreciated that such characteristics as demonstrated in the chart 34 provides an additional shifted element in the output emission of a LED 29 compared to those LEDs 28 in the art which taper quickly to zero after peaking.

Specifically, for the LED 29 characterised in the chart 34, the 2^{nd} peak 38 at 512nm provides a broad red-shifted element to the output emission of the LED having a predominantly blue emission ∼445nm (I_{REL} = 1).

A suitable LED 29 to achieve the disclosed functionality above, and to provide the characteristics of the LED represented by the relative spectral emission curve in the chart 34 is an Oslon ® Signal ® 80 LB CL7P LED, which is solely used as a signaling light for emergency vehicles e.g. police vehicles, ambulances etc.

The Oslon ® Signal ® 80 LB CL7P LED has a forward voltage V_{F} = 3.10v, and viewing angle of 80° at 50% Iᵥ, and is formed of ThinGaN material. The Oslon ® Signal ® 80 LB CL7P LED also has a SMD ceramic package which can be secured to a printed circuit board (not shown) inside the housing 22 of the luminaire 20.

Advantageously, the broad red-shifted element in the spectrum of the emitted radiation attenuates the output blue radiation to a more natural colour thereby simulating natural twilight and moonlight and mimicking the spectral cues required for reproduction and feeding in coral and plants.

It will be appreciated that although only one particular embodiment of the invention has been described in detail, various modifications and improvements can be made by a person skilled in the art without departing from the scope of the present invention. For example, whilst the LED described at Figure 4 discloses two peaks occurring substantially at 445nm and 512nm, the peaks could feasibly occur at any wavelength as specified in claim 1 depending on the manufacturing processes and materials used, and furthermore, it is also possible to have more than two peaks in the spectrum of varying intensities.

## Claims

1. An aquarium luminaire (20) having at least one non-white LED (29), **characterised in that** the at least one non-white LED (29) comprises at least two peaks (36,38) at wavelengths between 350nm≤λ≤750nm in the emission spectrum of the LED, wherein a dominant peak (36) of the at least two peaks (36,38) is at between 390nm≤λ≤490nm.

2. An aquarium luminaire (20) as claimed in Claim 1, wherein the at least one non-white LED (29) comprises:
a first peak (36) at 390nm≤λ≤490nm (I_{REL}=1) on a relative spectral emission curve of the LED and a second peak (38) at between 490 and 700nm (0<I_{REL}≤=1).

3. An aquarium luminaire (20) as claimed in any preceding claim, wherein the at least one non-white LED (29) is combined with at least one white LED (28) and/or at least one colored LED.

4. An aquarium luminaire (20) as claimed in any preceding claim, wherein the emission of the at least one non-white LED (29) is controlled by a controller.

5. An aquarium luminaire (20) as claimed in claim 4, wherein the controller controls the emission of any further LED combined with the at least one non-white LED (29).

6. An aquarium luminaire (20) as claimed in any preceding claim, wherein the at least one non-white LED (29) emits blue light.

7. An aquarium comprising (14) an aquarium luminaire (20) as claimed in any preceding claim.

## Patentansprüche

1. Aquariumleuchte (20) mit wenigstens einer nichtweißen LED (29), **dadurch gekennzeichnet, dass** die wenigstens eine nichtweiße LED (29) wenigstens zwei Spitzen (36, 38) bei Wellenlängen im Bereich 350 nm ≤ λ ≤ 750 nm im Emissionsspektrum der LED aufweist, wobei eine dominante Spitze (36) der wenigstens zwei Spitzen (36, 38) im Bereich 390 nm ≤ λ ≤ 490 nm liegt.

2. Aquariumleuchte (20) nach Anspruch 1, wobei die wenigstens eine nichtweiße LED (29) Folgendes umfasst:
eine erste Spitze (36) bei 390 nm ≤ λ ≤ 490 nm (I_{REL}=1) in einer relativen Spektralemissionskurve der LED und eine zweite Spitze (38) zwischen 490 und 700 nm (0<I_{REL}≤1).

3. Aquariumleuchte (20) nach einem der vorhergehenden Ansprüche, wobei die wenigstens eine nichtweiße LED (29) mit wenigstens einer weißen LED (28) und/oder wenigstens einer farbigen LED kombiniert ist.

4. Aquariumleuchte (20) nach einem der vorhergehenden Ansprüche, wobei die Emission der wenigstens einen nichtweißen LED (29) von einer Steuervorrichtung gesteuert wird.

5. Aquariumleuchte (20) nach Anspruch 4, wobei die Steuervorrichtung die Emission einer weiteren LED steuert, die mit der wenigstens einen nichtweißen LED (29) kombiniert ist.

6. Aquariumleuchte (20) nach einem der vorhergehenden Ansprüche, wobei die wenigstens eine nichtweiße LED (29) blaues Licht ausstrahlt.

7. Aquarium (14), umfassend eine Aquariumleuchte (20) nach einem der vorhergehenden Ansprüche.

## Revendications

1. Luminaire d'aquarium (20) comprenant au moins une DEL non blanche (29), **caractérisé en ce que** la au moins une DEL non blanche (29) comprend au moins deux pics (36, 38) à des longueurs d'onde entre 350 nm ≤ λ ≤ 750 nm dans le spectre d'émission de la DEL, dans lequel un pic dominant (36) des au moins deux pics (36, 38) est entre 390 nm ≤ λ ≤ 490 nm.

2. Luminaire d'aquarium (20) selon la revendication 1, dans lequel la au moins une DEL non blanche (29) comprend :
un premier pic (36) à 390 nm ≤ λ ≤ 490 nm (I_{REL} = 1) sur une courbe d'émission spectrale relative de la DEL et un second pic (38) entre 490 et 700 nm (0 ≤ I_{REL} ≤ 1).

3. Luminaire d'aquarium (20) selon l'une quelconque des revendications précédentes, dans lequel la au moins une DEL non blanche (29) est combinée à au moins une DEL blanche (28) et/ou au moins une DEL colorée.

4. Luminaire d'aquarium (20) selon l'une quelconque des revendications précédentes, dans lequel l'émission de la au moins une DEL non blanche (29) est commandée par une unité de commande.

5. Luminaire d'aquarium (20) selon la revendication 4, dans lequel l'unité de commande commande l'émission de toute DEL supplémentaire combinée à la au moins une DEL non blanche (29).

6. Luminaire d'aquarium (20) selon l'une quelconque des revendications précédentes, dans lequel la au moins une DEL non blanche (29) émet de la lumière bleue.

7. Aquarium (14) comprenant un luminaire d'aquarium (20) selon l'une quelconque des revendications précédentes.
